# EUROPEAN PATENT APPLICATION

(11) **EP 2 993 329 A1**
(43) Date of publication of application: **09.03.2016**
(21) Application number: 15183293.8
(22) Date of filing: 01.09.2015
(51) Int. Cl.: F02B 33/40, F02B 39/10, F02B 37/04, F02B 37/16, F02D 41/12, F02B 37/12, F02D 41/00

(54) **INTERNAL COMBUSTION ENGINE SYSTEM**

(30) Priority: 02.09.2014 JP 2014178214
(71) Applicant: Toyota Jidosha Kabushiki Kaisha, Toyota-shi, Aichi-ken 471-8571 (JP)
(72) Inventor: SUGIYAMA, Satoshi, TOYOTA-SHI, AICHI-KEN, 471-8571 (JP)
(74) Representative: Intès, Didier Gérard André

(57) **Abstract**

An internal combustion engine system includes: a turbosupercharger having a turbo-compressor arranged in a first intake passage; a throttle valve provided on a downstream side relative to the turbo-compressor; a second intake passage that bypasses the turbo-compressor; and an electric supercharger in which a compressor wheel disposed in the second intake passage is driven by an electric motor. When a request to decelerate the internal combustion engine is issued (102) during driving of the compressor wheel by the electric motor (100), driving of the compressor wheel by the electric motor is stopped (104) before the throttle valve starts a valve closing operation (106), and the intake bypass valve opens (108) at or after a time at which a valve closing operation of the throttle valve starts (106).

## Description

### Background of the Invention

### Technical Field

The present invention relates to an internal combustion engine system having an electric supercharger together with a turbosupercharger as superchargers.

### Background Art

A known supercharging system for an internal combustion engine is disclosed, for example, in Japanese Patent Laid-Open No. 2005-201092. In the aforementioned supercharging system, an electric supercharger is installed in an intake passage at a position that is on an upstream side relative to a turbo-compressor of a turbosupercharger. Further, a bypass passage that bypasses the electric supercharger is provided in the intake passage at a position that is on the upstream side of the turbo-compressor. A bypass valve that adjusts an inflow amount of air into the bypass passage is provided in the bypass passage. In the aforementioned supercharging system, when an operating point of the electric supercharger enters a surge region or when there is a concern of the operating point entering a surge region, the aforementioned bypass valve is opened to avoid the occurrence of surge.

Further, as disclosed, for example, in Japanese Patent Laid-Open No. 2007-077854, an internal combustion engine system is known which includes a turbo-compressor and an electric supercharger that are provided in parallel in an intake passage. Technical Problem

In an internal combustion engine system in which a turbo-compressor and an electric supercharger are provided in parallel in an intake passage, unlike the system in which the electric supercharger and turbo-compressor are provided in series that is disclosed in Japanese Patent Laid-Open No. 2005-201092, an intake bypass passage that bypasses the electric supercharger and an intake bypass valve are not required in order to switch a supercharging mode between a single-supercharging mode that uses only the turbo-compressor and a twin-supercharging mode that uses both the turbo-compressor and the electric supercharger. However, in a case where the aforementioned intake bypass passage is not provided in a system that adopts the aforementioned parallel method, when a throttle valve on a downstream side is closed at a time that a request to decelerate the internal combustion engine is issued during operation of the electric supercharger, an intake bypass passage can no longer be utilized to allow the outlet pressure of the electric supercharger to escape. Consequently, there is a possibility that surge will occur. On the other hand, in order to simplify the system configuration and reduce costs, it is desirable to make it possible to suppress the occurrence of surge in the electric supercharger at a time of deceleration without adding an intake bypass passage and an intake bypass valve.

### Summary of the Invention

The present invention has been conceived to address the above-described problem, and an object of the present invention is to provide an internal combustion engine system that is configured to enable suppression of the occurrence of surge in an electric supercharger at a time of deceleration of an internal combustion engine while avoiding complication of the system configuration.

A first aspect of the present invention is an internal combustion engine system. The internal combustion engine system includes: a turbosupercharger including a turbine that is provided in an exhaust passage and that operates by means of exhaust energy of an internal combustion engine, and a turbo-compressor that is provided in a first intake passage and that is driven by the turbine and that is configured to supercharge intake air; an intake bypass passage that bypasses the turbo-compressor; an intake bypass valve configured to open and close the intake bypass passage; a throttle valve that is disposed in the first intake passage on a downstream side relative to the turbo-compressor, and that is configured to open and close the first intake passage; a second intake passage that connects the first intake passage at a position that is on an upstream side relative to the turbo-compressor, and the first intake passage at a position that is on a downstream side relative to the turbo-compressor and is on an upstream side relative to the throttle valve; an electric supercharger that includes a compressor wheel disposed in the second intake passage and an electric motor configured to drive the compressor wheel, and that is configured to supercharge intake air by driving the compressor wheel by means of the electric motor; throttle control means for closing the throttle valve in a case where a deceleration request with respect to the internal combustion engine is issued; electric motor control means for, in a case where the deceleration request is issued during driving of the compressor wheel by the electric motor, stopping driving of the compressor wheel by the electric motor before the throttle valve starts a valve closing operation or at a same time as the throttle valve starts a valve closing operation; and intake bypass valve control means for, in a case where the deceleration request is issued during driving of the compressor wheel by the electric motor, opening the intake bypass valve at or after a time at which a valve closing operation of the throttle valve starts.

Further, according to a second aspect of the present invention, in the first aspect, the internal combustion engine system may include: an intake switching valve configured to open and close the second intake passage; and intake switching valve control means for, in a case where the deceleration request is issued during driving of the compressor wheel by the electric motor, closing the intake switching valve at a time that is at or after a time at which the driving of the compressor wheel by the electric motor stops and is before a time at which the throttle valve starts a valve closing operation.

According to the first aspect of the present invention, in a case where a deceleration request with respect to the internal combustion engine is issued during driving of the compressor wheel by the electric motor, driving of the compressor wheel is stopped before the throttle valve starts a valve closing operation or at the same time as the throttle valve starts a valve closing operation. By this means, occurrence of surge in the electric supercharger at a time of deceleration can be suppressed without the need to provide an intake bypass passage and an intake bypass valve in order to suppress surge in the electric supercharger. Further, the occurrence of surge in the turbo-compressor at a time of deceleration can also be suppressed.

According to the second aspect of the present invention, after closing the throttle valve, it is possible to suppress the occurrence of a situation in which a portion of intake air that was compressed by the turbo-compressor flows back towards the upstream side of the turbo-compressor through the second intake passage.

### Brief Description of the Drawings

Fig. 1 is a view for schematically describing the configuration of an internal combustion engine system according to a first embodiment of the present invention;
Fig. 2 is a view for describing a relation between supercharging modes that are used in the internal combustion engine system and engine operation range;
Fig. 3 is a compressor map that is used for describing compressor surge at deceleration;
Figs. 4A to 4E are time charts for describing surge suppression control for a time of deceleration in the first embodiment of the present invention;
Fig. 5 is a flowchart of a routine that is executed in the first embodiment of the present invention;
Figs. 6A to 6F are time charts for describing surge suppression control for a time of deceleration in a second embodiment of the present invention; and
Fig. 7 is a flowchart of a routine that is executed in the second embodiment of the present invention.

### Detailed Description of the Preferred Embodiments

### First Embodiment

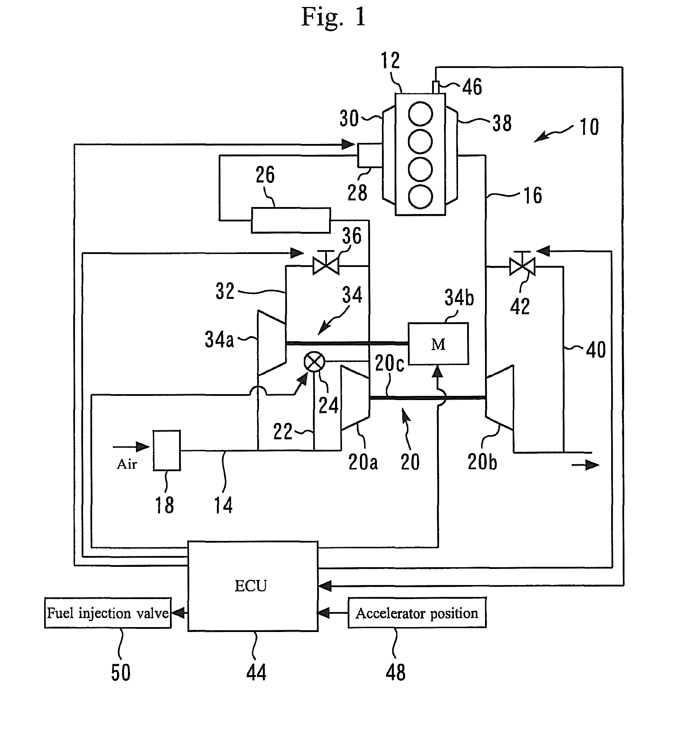

First, a first embodiment of the present invention will be described with reference to Figs. 1 to 5.

### [Hardware configuration of internal combustion engine system]

Fig. 1 is a view for schematically describing the configuration of an internal combustion engine system 10 according to the first embodiment of the present invention. The internal combustion engine system 10 shown in Fig. 1 includes an internal combustion engine main body 12. The internal combustion engine system 10 is a system that has a compression-ignition type engine (as one example, a diesel engine), and is mounted in a vehicle and used as a power source of the vehicle. A first intake passage 14 and an exhaust passage 16 communicate with the respective cylinders of the internal combustion engine main body 12.

An air cleaner 18 is provided in the vicinity of an inlet of the first intake passage 14. A turbo-compressor 20a of a turbosupercharger 20 for supercharging intake air is disposed in the first intake passage 14 at a position on a downstream side relative to the air cleaner 18. A centrifugal compressor or an axial flow compressor is used as the turbo-compressor 20a. The turbosupercharger 20 includes a turbine 20b that is provided in the exhaust passage 16 and that operates by means of exhaust energy of exhaust gas. The turbo-compressor 20a is integrally connected to the turbine 20b through a connecting shaft 20c, and is rotationally driven by exhaust energy of exhaust gas that enters the turbine 20b. The internal combustion engine system 10 also includes an intake bypass passage 22 that bypasses the turbo-compressor 20a, and an intake bypass valve 24 that opens and closes the intake bypass passage 22. For example, a solenoid valve can be used as the intake bypass valve 24.

An intercooler 26 is disposed in the first intake passage 14 at a position on the downstream side relative to the turbo-compressor 20a. The intercooler 26 is used for cooling intake air after being compressed by the turbo-compressor 20a or by both the turbo-compressor 20a and an electric supercharger 34 that is described later. An electronically controlled throttle valve 28 that opens and closes the first intake passage 14 is disposed in the first intake passage 14 on the downstream side relative to the intercooler 26. A portion of the first intake passage 14 that is on the downstream side relative to the throttle valve 28 is configured as an intake manifold 30. Intake air is distributed to the respective cylinders through the intake manifold 30.

The internal combustion engine system 10 further includes a second intake passage 32 that connects the first intake passage 14 at a position on the upstream side relative to the turbo-compressor 20a, with the first intake passage 14 at a position that is on the downstream side relative to the turbo-compressor 20a and is on the upstream side relative to the throttle valve 28. That is, the second intake passage 32 bypasses the turbo-compressor 20a. A compressor wheel 34a of the electric supercharger 34 is disposed in the second intake passage 32. The compressor wheel 34a is driven by an electric motor 34b. Electric power from a power source that is not shown in the drawing is supplied to the electric motor 34b. The electric supercharger 34 is also a centrifugal compressor or an axial flow compressor. According to the electric supercharger 34, intake air can be supercharged by driving the compressor wheel 34a by means of the electric motor 34b.

An intake switching valve 36 that opens and closes the second intake passage 32 is disposed in the second intake passage 32 on the downstream side relative to the electric supercharger 34. For example, a solenoid valve can be used as the intake switching valve 36. Note that, although in this case a configuration in which the intake switching valve 36 is disposed in the second intake passage 32 on the downstream side of the electric supercharger 34 is illustrated as one example, a location at which to dispose the intake switching valve 36 is not limited to the aforementioned location as long as the intake switching valve 36 opens and closes the second intake passage 32, and for example may be upstream of the electric supercharger 34. Note that, instead of providing the intake switching valve 36, a check valve may be provided that is configured so as to allow a flow of air toward the throttle valve 28 side through the second intake passage 32 and restrict a flow of air in the opposite direction thereto.

Exhaust gas from the respective cylinders is collected by an exhaust manifold 38 in the exhaust passage 16, and discharged to the downstream side. An exhaust bypass passage 40 that bypasses the turbine 20b is connected to the exhaust passage 16. A waste gate valve 42 is disposed in the exhaust bypass passage 40 as a bypass valve for opening and closing the exhaust bypass passage 40.

The system of the present embodiment also includes an electronic control unit (ECU) 44. The ECU 44 includes at least an input/output interface, a memory, and a central processing unit (CPU). The input/output interface is provided in order to take in sensor signals from various sensors installed in the internal combustion engine system 10, and also to output actuating signals to various actuators provided in the internal combustion engine system 10. The sensors from which the ECU 44 takes in signals include various sensors for acquiring the engine operating state such as a crank angle sensor 46 for acquiring the rotational position of a crankshaft and an engine speed. The aforementioned sensors also include an accelerator position sensor 48 for detecting a depression amount of an accelerator pedal (accelerator position) of the vehicle in which the internal combustion engine system 10 is mounted. In addition to the above described intake bypass valve 24, throttle valve 28, electric motor 34b, intake switching valve 36 and waste gate valve 42, the actuators to which the ECU 44 outputs actuating signals also include various actuators for controlling the engine operations such as fuel injection valves 50 for supplying fuel into the combustion chambers of the respective cylinders. Various control programs and maps and the like for controlling the internal combustion engine system 10 are stored in the memory. The CPU reads out a control program or the like from the memory and executes the control program, and generates actuating signals for the various actuators based on sensor signals taken in.

### [Supercharging modes]

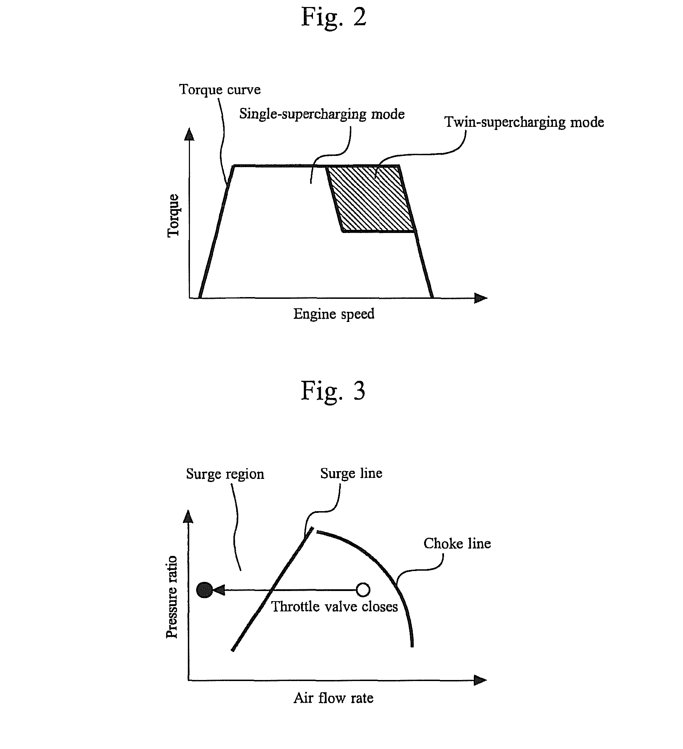

Fig. 2 is a view for describing the relation between supercharging modes that are used in the internal combustion engine system 10 and engine operation range. In the internal combustion engine system 10, either one mode among a single-supercharging mode and a twin-supercharging mode is selected in accordance with the engine operation range.

The single-supercharging mode is a supercharging mode that utilizes only the turbosupercharger 20. In the single-supercharging mode, passage of a current to the electric motor 34b is stopped, and the intake switching valve 36 is fully closed. As a result, intake air that is supercharged by the turbo-compressor 20a utilizing exhaust energy is supplied to the combustion chambers of the respective cylinders without flowing into the second intake passage 32.

On the other hand, the twin-supercharging mode is a supercharging mode that utilizes the electric supercharger 34 together with the turbosupercharger 20. In the twin-supercharging mode a current is passed to the electric motor 34b in a state in which the intake switching valve 36 has been opened. As a result, intake air that was introduced into the second intake passage 32 is supercharged by the electric supercharger 34. The intake air that was supercharged by the electric supercharger 34 merges with the intake air that was supercharged by the turbo-compressor 20a, and the intake air is then supplied to the combustion chambers of the respective cylinders. By this means, the electric supercharger 34 can be utilized to assist the supercharging by the turbosupercharger 20.

As shown in Fig. 2, the twin-supercharging mode is used in a high-rotation and high-load range in the vicinity of an output point at which the highest output of the engine is obtained. The single-supercharging mode corresponds to a supercharging mode in a case where supercharging is performed outside of the operation range in which the twin-supercharging mode is used.

### [Deceleration surge]

Fig. 3 is a compressor map that is used for describing compressor surge at deceleration. In Fig. 3, the vertical axis represents a pressure ratio (outlet pressure/inlet pressure) between the pressures before and after the compressor, and the horizontal axis represents the flow rate of air passing through the compressor. The characteristics of this compressor map are common to both the turbo-compressor 20a and the electric supercharger 34. In Fig. 3, a region on a low air flow rate side relative to a surge line corresponds to a surge region in which surge occurs.

It is taken as a premise that, in the internal combustion engine system 10, when a request to decelerate the internal combustion engine that is issued by releasing depression of the accelerator pedal is detected, control is performed that closes the throttle valve 28 so as to cause the driver to experience a deceleration feeling. When the throttle valve 28 on the downstream side is closed at a time that supercharging is performed by the turbo-compressor 20a or is performed by both the turbo-compressor 20a and the electric supercharger 34, the flow rate of air passing through the compressor decreases while the outlet pressure of the compressor remains as it is and does not decrease. Consequently, under such circumstances, the operating point of the compressor moves to the low air flow rate side on the compressor map. Therefore, in a case where the movement amount of the operating point is large, as in the example illustrated in Fig. 3, the operating point of the compressor enters the surge region and surge occurs. Hereunder, surge occurring at a time of deceleration in the above described situation is referred to simply as "deceleration surge".

### [Characteristic control in first embodiment]

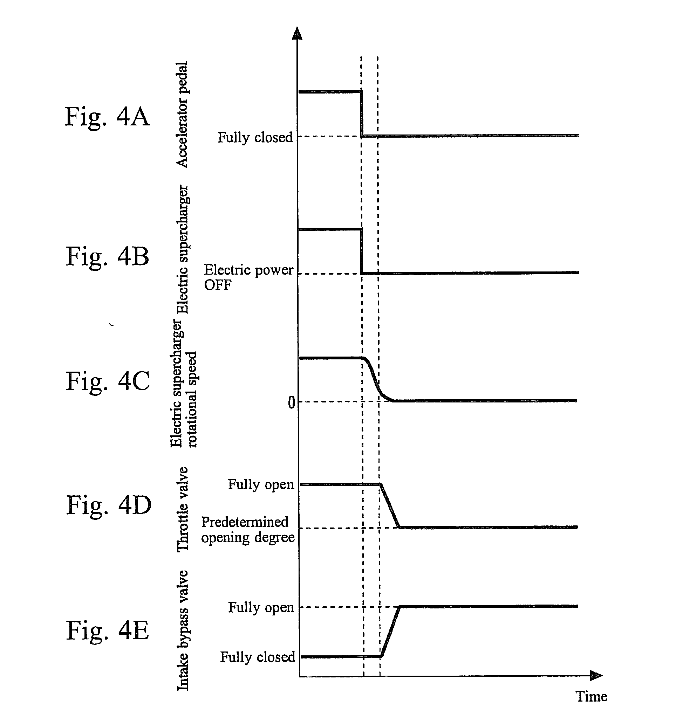

Figs. 4A to 4E are time charts for describing surge suppression control for a time of deceleration in the first embodiment of the present invention. If depression of the accelerator pedal is released at the time of high-rotation and high-load operation in which the twin-supercharging mode is used, and the throttle valve 28 is consequently closed, deceleration surge is liable to occur in both of the electric supercharger 34 and the turbo-compressor 20a. Therefore, in the present embodiment, in a case where depression of the accelerator pedal is released during driving of the compressor wheel 34a by the electric motor 34b (that is, while the electric supercharger 34 is operating), in order to avoid the occurrence of deceleration surge in each of the electric supercharger 34 and the turbo-compressor 20a, a configuration is adopted in which operations of respective actuators are performed in the order described hereunder. Note that, the following description in the present specification relates to an example in which the opening degree of the intake bypass valve 24 is controlled between a fully-open opening degree and a fully-closed opening degree. The terms "fully-open opening degree" and "fully-closed opening degree" used herein refer to a maximum opening degree and a minimum opening degree within a predetermined opening degree control range, respectively, and are not necessarily limited to 100% and 0% as the opening degrees of the valve. This fact similarly applies with respect to opening degree control of the intake switching valve 36 according to the second embodiment. Further, as long as the opening degrees of the intake bypass valve and the intake switching valve that are used for the control of the present invention are controlled so that the advantageous effects of the present invention are obtained, the opening degrees of the intake bypass valve and the intake switching valve are not limited to a fully-open opening degree and a fully-closed opening degree, and may each be arbitrary predetermined opening degrees.

When depression of the accelerator pedal is released (accelerator is fully closed) during use in the twin-supercharging mode as shown in Fig. 4A, first, as shown in Fig. 4B, passage of a current to the electric motor 34b of the electric supercharger 34 is stopped. By this means, driving of the compressor wheel 34a is stopped. As a result, as shown in Fig. 4C, the rotational speed of the electric supercharger 34 decreases. Note that, apart from simply stopping the passage of a current to the electric motor 34b as described above, methods for stopping driving of the compressor wheel 34a also include the following method. That is, in order to quickly reduce the rotational speed of the electric supercharger 34 to zero, a method may also be adopted that imparts a braking force to the rotation of the electric motor 34b, that is, the rotation of the compressor wheel 34a, by utilizing a counter electromotive force that arises in the electric motor 34b that rotates through inertia after the passage of a current thereto is stopped.

After the compressor wheel 34a has been driven, as shown in Fig. 4D, an operation to close the throttle valve 28 to a predetermined opening degree is started. The term "predetermined opening degree" used here refers to an opening degree that is set in advance as an opening degree of the throttle valve 28 for enabling a deceleration feeling to be obtained at a time of deceleration. Note that, a timing for stopping driving of the compressor wheel 34a is not limited to a timing that is before an operation to close the throttle valve 28 starts as in the above example, and may be a timing that is simultaneous with the start of the valve closing operation of the throttle valve 28.

Further, simultaneously with the start of the valve closing operation of the throttle valve 28, as shown in Fig. 4E, the intake bypass valve 24 is opened so as to be at a fully open position. Note that, the intake bypass valve 24 may also be configured to open after the valve closing operation of the throttle valve 28 starts.

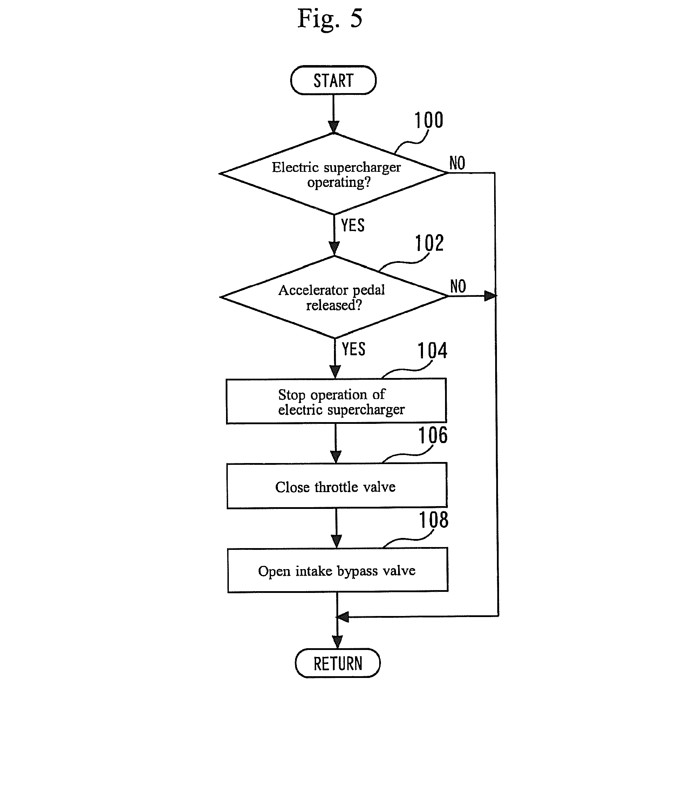

Fig. 5 is a flowchart illustrating a control routine that the ECU 44 executes to realize surge suppression control for a time of deceleration in the first embodiment of the present invention. Note that the present routine is repeatedly executed for each predetermined control period.

In the routine shown in Fig. 5, first, in step 100, the ECU 44 determines whether or not the electric supercharger 34 is operating. When the engine operation range is a high-rotation and high-load range that utilizes the twin-supercharging mode, the result of the determination in the present step 100 is affirmative.

When the result of the determination in step 100 is affirmative, the ECU 44 proceeds to step 102 to determine whether or not depression of the accelerator pedal has been released. When the result determined in the present step 102 is affirmative, that is, when a request to decelerate the internal combustion engine is detected, the ECU 44 proceeds to step 104. In step 104, the ECU 44 stops driving of the compressor wheel 34a by stopping the passage of a current to the electric motor 34b.

Next, the ECU 44 proceeds to step 106 to execute an operation to close the throttle valve 28 to the aforementioned predetermined opening degree. Next, the ECU 44 proceeds to step 108 to open the intake bypass valve 24 so as to be at the fully open position.

The internal combustion engine system 10 that is described above includes the turbo-compressor 20a and the electric supercharger 34 that are arranged in parallel to each other. According to this configuration, unlike a configuration in which a turbosupercharger and an electric supercharger are arranged in series, a bypass passage and a bypass valve for bypassing an electric supercharger are not required to be installed in order to switch a supercharging mode between a single-supercharging mode and a twin-supercharging mode. Therefore, in a case where a parallel method is adopted, it can be said that cost reductions can be achieved if it is not necessary to provide an intake bypass passage and an intake bypass valve as a countermeasure for deceleration surge in an electric supercharger. According to the control of the present embodiment, in a case where a deceleration request is issued during operation of the electric supercharger 34, driving of the compressor wheel 34a is stopped before closing the throttle valve 28. In other words, the start of an operation to close the throttle valve 28 is delayed relative to stopping the driving of the compressor wheel 34a. When a force that drives the compressor wheel 34a ceases as a result of the passage of a current to the electric motor 34b being stopped, supercharging by the electric supercharger 34 is no longer performed and hence surge does not occur in the electric supercharger 34. Therefore, by stopping driving of the compressor wheel 34a prior to the start of an operation to close the throttle valve 28, the occurrence of deceleration surge in the electric supercharger 34 can be suppressed without requiring the installation of a bypass passage and a bypass valve in order to suppress the occurrence of deceleration surge in the electric supercharger 34. Further, since a flow of intake air toward the second intake passage 32 ceases when driving of the compressor wheel 34a is stopped, an inlet pressure of the turbo-compressor 20a increases. Since this increase in the inlet pressure of the turbo-compressor 20a acts so as to reduce the pressure ratio between the pressures before and after the turbo-compressor 20a, the increase in the inlet pressure has a favorable impact with regard to suppressing the occurrence of deceleration surge in the turbo-compressor 20a.

Further, according to the control of the present embodiment, the intake bypass valve 24 is opened together with the start of an operation to close the throttle valve 28. By opening the intake bypass valve 24, the occurrence of deceleration surge in the turbo-compressor 20a can be suppressed. From the viewpoint of simply suppressing the occurrence of deceleration surge in the turbo-compressor 20a, it is sufficient to open the intake bypass valve 24 immediately upon receiving a deceleration request. However, by adopting a configuration so that the intake bypass valve 24 is not opened prior to starting a valve closing operation with respect to the throttle valve 28, a situation in which the amount of air flowing into the respective cylinders decreases prior to the valve closing operation of the throttle valve 28 can be avoided. By this means, a configuration can be adopted in which the timing of the generation of a deceleration feeling that is based on the timing of a valve closing operation of the throttle valve 28 does not change depending on whether or not a deceleration surge countermeasure is executed.

Note that, in the above described first embodiment, "throttle control means" according to the first aspect of the present invention is realized by the ECU 44 executing the processing in step 106 under circumstances in which the result determined in step 102 is affirmative, "electric motor control means" according to the first aspect of the present invention is realized by the ECU 44 executing the processing in step 104 prior to the processing in step 106 under circumstances in which the results determined in steps 100 and 102 are both affirmative, and "intake bypass valve control means" according to the first aspect of the present invention is realized by the ECU 44 executing the processing in step 108 after executing the processing in step 106.

### Second Embodiment

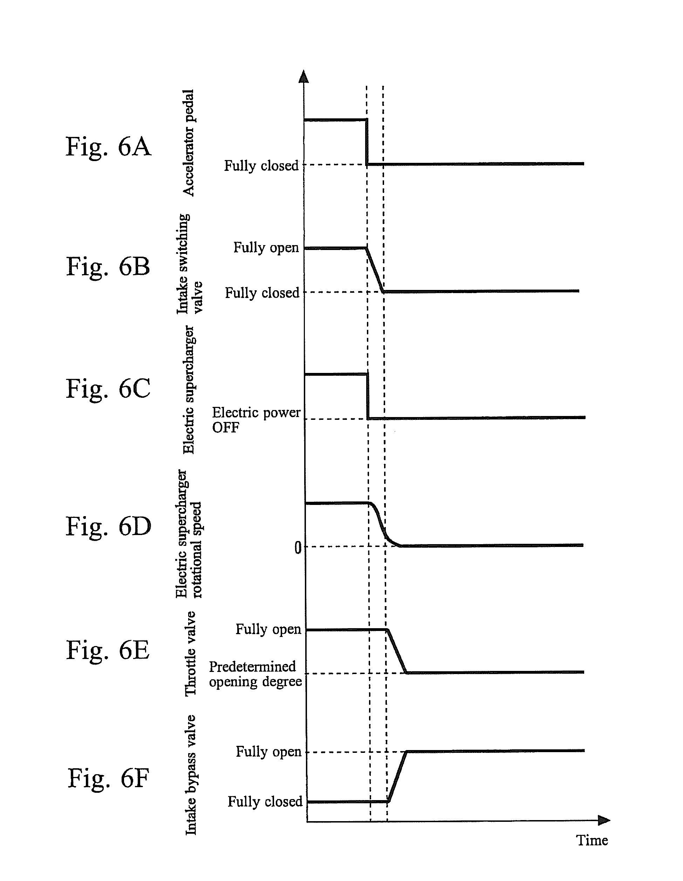

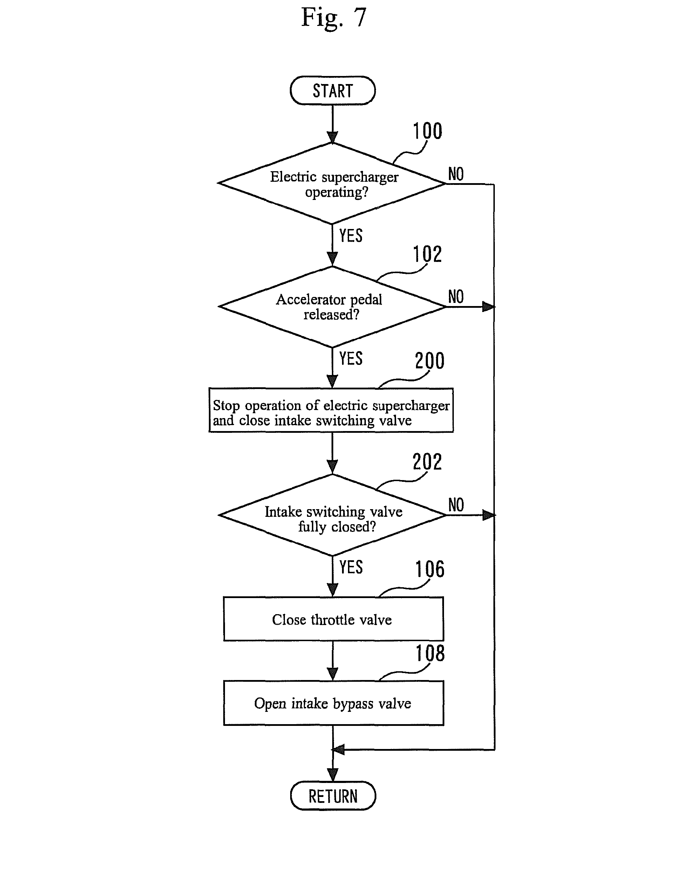

Next, a second embodiment of the present invention will be described while referring newly to Figs. 6A to 6F and 7. The present embodiment is one which performs the following surge suppression control for a time of deceleration, using the above described hardware configuration of the internal combustion engine system 10.

### [Characteristic control in second embodiment]

In a case where a deceleration request is issued during operation of the electric supercharger 34, although, with respect to the electric supercharger 34, driving of the compressor wheel 34a can be stopped by stopping the passage of a current to the electric motor 34b, a driving force that is based on exhaust energy continues to be supplied to the turbo-compressor 20a. Consequently, if the intake switching valve 36 remains open, a portion of intake air compressed by the turbo-compressor 20a flows back toward the upstream side of the turbo-compressor 20a through the second intake passage 32. In the present embodiment, surge suppression control for a time of deceleration is performed that also includes a countermeasure for such a backflow.

Figs. 6A to 6F are time charts for describing surge suppression control for a time of deceleration according to a second embodiment of the present invention. The time charts shown in Figs. 6A to 6F differ from the time charts shown in the above described Figs. 4A to 4E in the respect that control of the intake switching valve 36 is added and, further, the timing at which to start a valve closing operation with respect to the throttle valve 28 is determined based on the relation with operation of the intake switching valve 36.

That is, in a case where, as shown in Fig. 6A, depression of the accelerator pedal is released (accelerator is fully closed) while the twin-supercharging mode is being used, first, as shown in Fig. 6B and Fig. 6C, simultaneously with stopping of the driving of the electric supercharger 34, an operation is started to close the intake switching valve 36 to a fully closed position. After the intake switching valve 36 has been fully closed, as shown in Fig. 6E, an operation to close the throttle valve 28 is started. Further, simultaneously with the start of the operation to close the throttle valve 28, as shown in Fig. 6F, the intake bypass valve 24 is opened. Note that, the operation to close the intake switching valve 36 may also be started at a timing that is after driving of the compressor wheel 34a is stopped. Further, similarly to the first embodiment, a configuration may also be adopted in which the intake bypass valve 24 is opened after the start of the operation to close the throttle valve 28, and not simultaneously with the start of the operation to close the throttle valve 28.

Fig. 7 is a flowchart illustrating a control routine that the ECU 44 executes to realize surge suppression control for a time of deceleration according to a second embodiment of the present invention. Note that, in Fig. 7, steps that are the same as steps shown in Fig. 5 according to the first embodiment are denoted by the same reference numerals, and a description of those steps is omitted or simplified.

In the routine shown in Fig. 7, when the result determined in step 102 is affirmative, the ECU 44 proceeds to step 200. In step 200, the ECU 44 stops the passage of a current to the electric motor 34b and also executes a valve closing operation to close the intake switching valve 36 to a fully closed position.

Next, the ECU 44 proceeds to step 202 to determine whether or not the intake switching valve 36 has been fully closed. When it is determined as a result that the intake switching valve 36 has been fully closed, the ECU 44 proceeds to step 106.

According to the routine illustrated in Fig. 7 that is described above, in addition to the advantageous effects of the surge suppression control for a time of deceleration of the first embodiment, the following advantageous effects are obtained. That is, according to the above described routine, an operation to close the intake switching valve 36 is started simultaneously with stopping the driving of the compressor wheel 34a. Subsequently, after the intake switching valve 36 has been fully closed, an operation to close the throttle valve 28 is started. By this means, it is possible to suppress the occurrence of a situation in which a portion of intake air after being compressed by the turbo-compressor 20a flows back toward the upstream side of the turbo-compressor 20a through the second intake passage 32. Further, as described above, the timing for starting the valve closing operation with respect to the intake switching valve 36 does not necessarily have to be simultaneous with stopping of the driving of the compressor wheel 34a. However, if the timing to start the operation to close the intake switching valve 36 is delayed, it will mean that the aforementioned backflow will be allowed during a period prior to closing the throttle valve 28, and this may result in the amount of air flowing into the respective cylinders during the aforementioned period being decreased. Consequently, it can be said that it is better for the aforementioned starting timing to be as early as possible, as in the above described control example in which the starting timing is simultaneous with stopping the driving of the compressor wheel 34a.

Note that, in the above described second embodiment, the "electric motor control means" according to the first aspect of the present invention and the "intake switching valve control means" according to the second aspect of the present invention are respectively realized by the ECU 44 executing the processing in step 200 prior to executing the processing in step 106 under circumstances in which the results determined in steps 100 and 102 are both affirmative.

Moreover, since a time of deceleration from the high-rotation and high-load range that utilizes the twin-supercharging mode is a time of a state in which both the electric supercharger 34 and the turbo-compressor 20a are caused to exert a high supercharging effect, it can be said that such a time is a situation in which deceleration surge is liable to occur with respect to both the electric supercharger 34 and the turbo-compressor 20a. However, with regard to the usage modes of the electric supercharger 34, apart from using the electric supercharger 34 in a high-rotation and high-load range as described above, for example, the usage modes of the electric supercharger 34 may also include actuating the electric supercharger 34 to assist the turbosupercharger 20 when rapid acceleration is requested during use in a low-rotation and low-load range. Accordingly, the objects for application of the suppression control for deceleration surge in the above described first and second embodiments may also include a case where a request to decelerate the internal combustion engine is issued during operation of the electric supercharger 34 in such a situation.

Furthermore, in the above described first and second embodiments, examples are described in which the ECU 44 determines that there is a "request to decelerate the internal combustion engine" when depression of the accelerator pedal is released. A situation that corresponds to circumstances in which a "request to decelerate the internal combustion engine" is issued that is based on depression of the accelerator pedal being released is mainly a time when depression of the accelerator pedal is released in a case where the driver wishes to decelerate the vehicle. Apart from the aforementioned situation, for example, a situation in which depression of the accelerator pedal is released temporarily when a gear stage is changed to a higher gear stage at the time of acceleration of a vehicle having a spark-ignition type engine and a manual transmission corresponds to a situation in which a "request to decelerate the internal combustion engine" is issued. However, a "request to decelerate the internal combustion engine" is not necessarily limited to an occasion when depression of the accelerator pedal is released. For example, in a vehicle in which a clutch that is interposed between a spark-ignition type engine and a transmission is electronically controlled, in a state in which the accelerator pedal remains depressed at a time of acceleration of the vehicle, control is sometimes performed that closes a throttle valve after releasing the clutch in order to change the gear stage to a higher gear stage. In such a case, a command to close the throttle valve that is issued by the ECU corresponds to a "request to decelerate the internal combustion engine".

Although control for suppressing the occurrence of deceleration surge that takes a diesel engine that is a compression-ignition type engine as an object has been described in the foregoing first and second embodiments, the present invention may also be applied to a spark-ignition type engine such as a gasoline engine in which the intake air flow rate is adjusted utilizing a throttle valve.

## Claims

1. An internal combustion engine system (10), comprising:
a turbosupercharger (20) including a turbine (20b) that is provided in an exhaust passage (16) and that operates by means of exhaust energy of an internal combustion engine, and a turbo-compressor (20a) that is provided in a first intake passage (14a) and that is driven by the turbine (20b) and that is configured to supercharge intake air;
an intake bypass passage (22) that bypasses the turbo-compressor (20a);
an intake bypass valve (24) configured to open and close the intake bypass passage (22)
a throttle valve (28) that is disposed in the first intake passage (14) on a downstream side relative to the turbo-compressor (20a), and that is configured to open and close the first intake passage (14);
a second intake passage (32) that connects the first intake passage (14) at a position that is on an upstream side relative to the turbo-compressor (20a), and the first intake passage (14) at a position that is on a downstream side relative to the turbo-compressor (20a) and is on an upstream side relative to the throttle valve (28);
an electric supercharger (34) that includes a compressor wheel (34a) disposed in the second intake passage (32) and an electric motor (34b) configured to drive the compressor wheel (34a), and that is configured to supercharge intake air by driving the compressor wheel (34a) by means of the electric motor (34b); and
throttle control means for closing the throttle valve (28) in a case where a deceleration request with respect to the internal combustion engine is issued,
the internal combustion engine system (10) being **characterized by** comprising:
electric motor control means for, in a case where the deceleration request is issued during driving of the compressor wheel (34a) by the electric motor (34b), stopping driving of the compressor wheel (34a) by the electric motor (34b) before the throttle valve (28) starts a valve closing operation or at a same time as the throttle valve (28) starts a valve closing operation; and
intake bypass valve control means for, in a case where the deceleration request is issued during driving of the compressor wheel (34a) by the electric motor (34b), opening the intake bypass valve (24) at or after a time at which a valve closing operation of the throttle valve (28) starts.

2. The internal combustion engine system (10) according to claim 1, further comprising:
an intake switching valve (36) configured to open and close the second intake passage (32); and
intake switching valve control means for, in a case where the deceleration request is issued during driving of the compressor wheel (34a) by the electric motor (34b), closing the intake switching valve (36) at a time that is at or after a time at which the driving of the compressor wheel (34a) by the electric motor (34b) stops and is before a time at which the throttle valve (28) starts a valve closing operation.
